# FASCICULE DE BREVET EUROPEEN

(11) **EP 0 437 381 B1**
(45) Date de publication et mention de la délivrance du brevet: **13.09.1995**
(21) Numéro de dépôt: 91400010.4
(22) Date de dépôt: 03.01.1991
(51) Int. Cl.: B29C 49/58, B29C 49/42, B29C 49/06

(54) **Poinçon pour injection-soufflage d'un corps creux et machine utilisant un tel poinçon**
Dorn zum Spritzblasformen eines hohlen Gegenstandes und mit diesem Dorn versehenene Maschine
Mandrel for injection blow-moulding of a hollow article and machine using said mandrel

(30) Priorité: 09.01.1990 FR 9000184
(43) Date de publication de la demande: 17.07.1991
(73) Titulaire: KERPLAS SNC, F-76201 Dieppe Cédex (FR)
(72) Inventeur: Trebot, Alain, F-76730 Bacqueville en Caux (FR)
(74) Mandataire: Moncheny, Michel

(56) Documents cités:
- FR-A- 2 263 876
- FR-E- 89 219
- US-A- 3 583 036
- US-A- 3 969 060
- US-A- 4 150 689
- US-A- 4 244 913
- PATENT ABSTRACTS OF JAPAN, vol. 12, no. 416 (M-759)[3263], 4 novembre 1988;& JP-A 63 154 328 (YAMAKAWA) 27-06-1988

## Description

L'invention a pour objet une machine pour l'injection-soufflage d'un objet creux en matière plastique comportant un volume supérieur et un volume inférieur communiquant entre eux par un goulot d'étranglement de diamètre réduit, du type décrit dans le préambule de la revendication 1.

Jusqu'alors de tels objets, dits "flacons double-corps", lorsqu'ils sont réalisés par extrusion-soufflage, présentent des défauts dans la forme, une mauvaise concentricité du goulot d'étranglement et du col de déversement, une épaisseur de paroi variable.

Il en résulte des rejets importants et on coût de fabrication élevé.

Pour remédier aux inconvénients inhérents à l'extrusion-soufflage, certains flacons double corps sont réalisés par injection-soufflage. Lors de la mise en oeuvre d'un tel procédé il est nécessaire de tout d'abord mouler le premier corps puis mouler le second corps et ensuite assembler les deux corps. L'injection-soufflage nécessite donc un double outillage ce qui entraîne un coût de fabrication relativement élevé.

De plus le récipient étant réalisé en trois étapes, ceci entraîne des coûts de manutention qui accroissent le prix de revient.

Le document FR-A-2,263 876 montre un poinçon selon le préambule de la revendication 1.

L'invention a pour but de fournir une machine améliorée permettant l'injection-soufflage d'un flacon double corps en une seule opération.

A cet effet l'invention a pour objet une machine d'injection-soufflage du type précité, caractérisée par la partie caractérisante de la revendication 1.

D'autres caractéristiques sont décrites dans les sous-revendications 2 à 10.

Il est à noter que, dans le contexte différent de l'injection-soufflage de flacons simple corps de grande longueur tels que des bouteilles, le FR-A-2 263 876 décrit l'utilisation d'un poinçon ayant deux ouvertures de soufflage intermittent espacées axialement l'une de l'autre.

L'invention sera mieux comprise à la lecture de la description qui va suivre faite en référence aux dessins annexés sur lesquels :
- La figure 1 est une coupe axiale du poinçon d'une machine selon l'invention, en position de repos ;
- la figure 2 est une vue en coupe analogue à la figure 1, le poinçon étant en position de soufflage et représentant le flacon entourant le poinçon après soufflage ;
- les figures 3 à 8 représentent des coupes radiales du poinçon selon les lignes III-III à VIII-VIII de la figure 2.

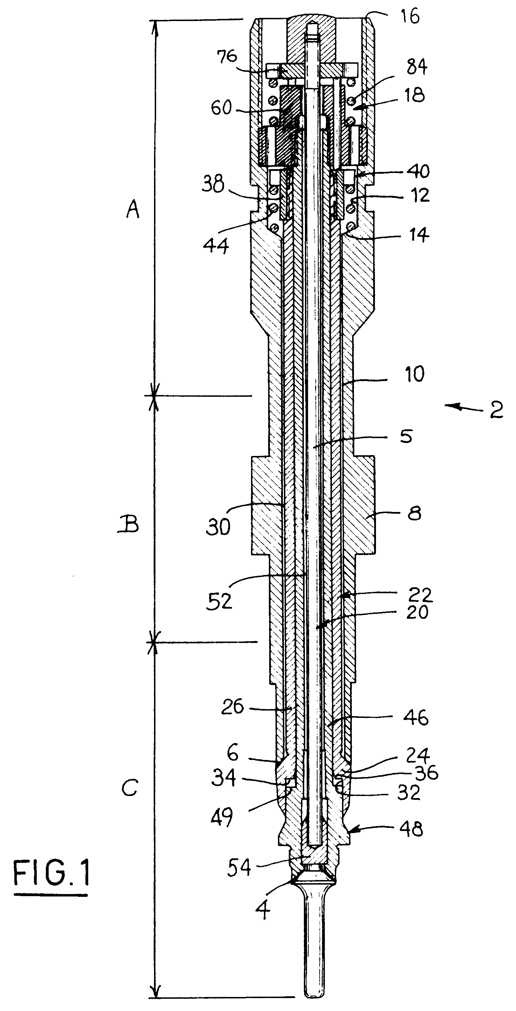

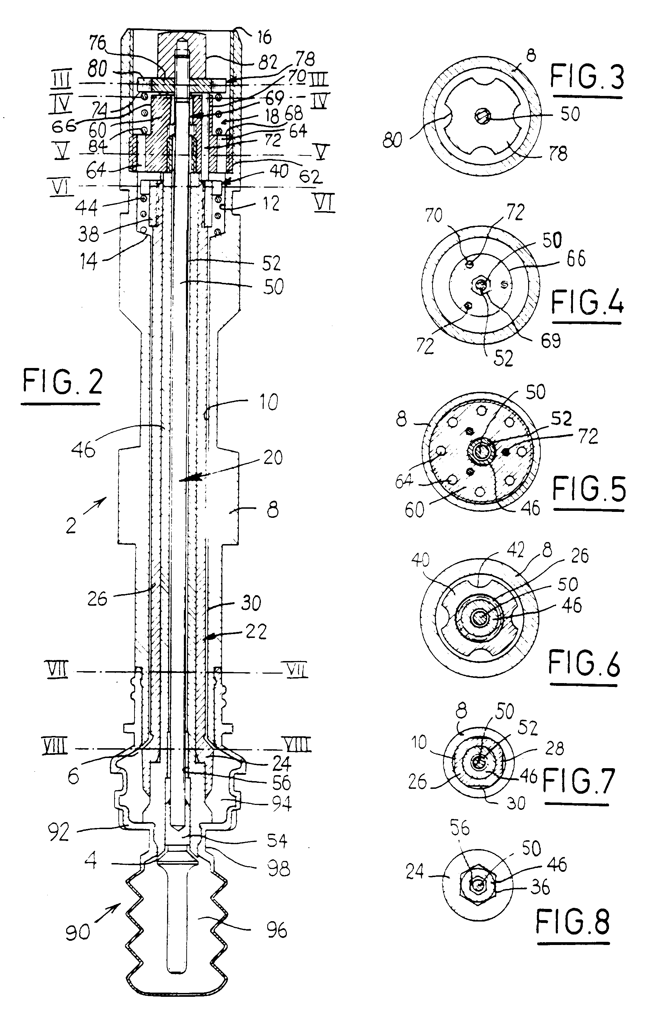

Sur les figures 1 et 2 on a représenté le poinçon 2 d'une machine selon l'invention, ayant une forme générale cylindrique.

De manière habituelle le poinçon 2 comporte une première partie A de liaison avec une machine à injecter-souffler non représentée.

La partie A est prolongée axialement par une partie B de positionnement dans la paroi d'un moule associé (non représenté), la partie B étant elle-même prolongée par une partie C de soufflage. La partie C est destinée à être située dans la cavité de moulage du moule associé.

La partie C est destinée à recevoir une paraison au poste d'injection d'une machine à injecter, puis est positionnée à l'intérieur d'un moule de soufflage pour réaliser l'objet creux désiré par soufflage.

A cet effet le poinçon selon l'invention comporte dans sa partie C deux ouvertures de soufflage 4 et 6 espacées axialement et deux moyens de soufflage intermittent associés chacun à une ouverture pour en provoquer l'ouverture par intermittence.

Dans le mode de réalisation représenté, le poinçon 2 comporte un corps cylindrique creux 8 comportant un alésage axial 10 ouvrant dans la partie A dans une chambre cylindrique 12 de diamètre supérieur à celui de l'alésage, délimitant ainsi un épaulement 14 constituant le fond de la chambre 12.

La chambre 12 est ouverte sur l'extrémité radiale libre 16 de la partie A.

Lorsque le poinçon est monté sur une machine à injecter-souffler, la chambre 12 communique par son ouverture avec une arrivée d'air sous pression de la machine.

Les moyens de soufflage intermittent comportent des moyens d'actionnement 18 situés dans la chambre 12 destinés à ouvrir ou fermer simultanément deux obturateurs mobiles 20 et 22 associés respectivement aux ouvertures 4 et 6.

Les obturateurs 20 et 22 sont constitués par des soupapes.

La soupape 22 comporte une tête 24 destinée à venir en appui sur la face d'extrémité du corps 8 qui forme siège de soupape.

La queue de soupape est constituée d'un manchon 26 monté coulissant dans l'alésage 10 du corps 8 et s'étendant axialement jusque dans la chambre 12, à proximité du fond 14.

La surface extérieure du manchon 26 comporte quatre méplats 28 (voir figure 7) qui délimitent avec l'alésage 10 quatre passages ou canaux longitudinaux parallèles à l'axe du poinçon 30 reliant l'ouverture 6 à la chambre 12.

Il faut noter qu'en variante du mode de réalisation représenté, on peut concevoir qu'il n'y ait qu'un seul canal longitudinal ou un nombre différent de canaux.

La tête 24 de la soupape 22 est constituée par une partie élargie du manchon 26 faisant saillie à l'extérieur du corps 8 du poinçon 2.

L'extrémité de la tête 24 comporte un alésage axial 32 de diamètre plus grand que celui du diamètre intérieur du manchon 26, définissant ainsi un épaulement 34 (voir figure 1).

Un perçage axial 36 de section hexagonale (voir figure 8) qui entoure une section radiale de la paroi intérieure du manchon 26, s'étend depuis l'épaulement 34 vers le haut en regardant la figure 1 et sur une longueur réduite. Le perçage 36 est destiné à permettre le montage de la soupape 22 comme cela sera décrit dans la suite.

L'extrémité du manchon 26 situé dans la chambre 12 est reliée par vissage à une bague 38 qui est montée coulissante dans la partie inférieure de la chambre 12.

La bague 38 comporte une partie cylindrique vissée sur le manchon 26 et une collerette radiale 40 à son extrémité supérieure. La collerette comporte quatre gorges 42 creusées dans sa surface extérieure (voir figure 6) pour délimiter des passages d'air le long de la paroi cylindrique de la chambre 12.

Un ressort 44 est situé entre le fond 14 de la chambre 12 et la face radiale inférieure de la collerette 40 et sollicite l'ensemble formé de la bague 38 et du manchon 26 dans la direction axiale correspondant à l'obturation de l'ouverture 6 par la tête 24 (vers le haut en regardant les figures 1 ou 2).

Un tube 46 fixe par rapport au corps 8 est agencé dans le manchon 26 de manière a ce que ce dernier puisse coulisser sur la surface extérieure du tube 46.

Le tube 46 comporte une extrémité inférieure 48 élargie reçue dans l'alésage interne 32 du manchon 26 et faisant saillie au-delà de l'extrémité de ce dernier, sa face radiale d'extrémité définissant l'ouverture 4.

La portion d'extrémité 48 comporte un épaulement 49 (voir figure 1) constituant une butée longitudinale pour l'épaulement 34 de la tête 24 de la soupape 22 lorsque cette dernière est mise en mouvement vers sa position ouverte (voir figure 2).

La portion d'extrémité 48 comporte une face d'extrémité inclinée axialement et formant siège pour la soupape 20 dont la queue 50 est montée coulissante avec jeu radial à l'intérieur du tube 46. Le jeu radial délimite un canal longitudinal d'amenée d'air 52 parallèle à l'axe du poinçon (voir également les figures 4 à 8) reliant l'ouverture 4 à la chambre 12.

Le diamètre intérieur de l'alésage interne de l'extrémité 48 est supérieur au diamètre intérieur du tube 46 pour recevoir un coulisseau 54 fixé à l'extrémité de la queue 50 et comportant par exemple des gorges longitudinales (non représentées) sur sa face extérieure pour faire communiquer le canal 52 et l'ouverture 4.

La partie recevant le coulisseau 54 est prolongée par un perçage axial 56 de section hexagonale possédant une longueur relativement réduite et destiné à permettre le montage du tube 46 comme cela sera décrit ultérieurement (voir figures 2 et 8).

L'extrémité du tube 46 située dans la chambre 12 fait saillie à l'extérieur du manchon 26 pour coopérer avec les moyens d'actionnement 18.

A cet effet l'extrémité du tube 46 comporte une partie filetée extérieurement coopérant avec un filetage complémentaire d'un organe de guidage 60 qui est lui-même vissé dans la chambre 12 de manière à ce que sa face radiale d'extrémité inférieure soit espacée de la collerette 40 dans la direction axiale.

L'organe 60 possède une forme cylindrique à deux étages. L'étage 62 de plus grande section est vissé dans la chambre 12 et comporte huit trous longitudinaux traversants 64 (voir également figure 5) formant des passages pour l'air vers la partie inférieure de la chambre 12 qui contient l'organe 38.

Les trous 64 sont régulièrement répartis sur un cercle coaxial et de diamètre supérieur à celui de la section du plus petit étage 66 de l'organe 38.

L'étage 66 prolonge vers le haut l'étage 62 et définit avec celui-ci une face radiale d'appui 68.

L'organe 60 comporte un perçage axial dont la partie inférieure comporte le filetage destiné à coopérer avec la partie filetée du tube 46 comme indiqué ci-dessus.

Le filetage est prolongé vers le haut par un alésage 69 de section hexagonale dont la plus petite dimension est supérieure au diamètre de la section de la queue 50 de la soupape 20 pour recevoir la partie supérieure de celle-ci avec jeu radial. Le jeu radial constitue la partie supérieure du canal 52.

L'organe 60 est également percé sur toute sa longueur de trois trous 70 (voir figure 4) dans lesquels sont montées coulissantes trois barres 72.

L'extrémité radiale inférieure des barres 72 vient en appui sur la face radiale supérieure de l'ensemble formé par la bague 38 et la queue 26 de la soupape 22.

La seconde extrémité des barres 72 vient en appui sur une face radiale inférieure 74 d'un poussoir 76.

Le poussoir 76 comporte à sa partie inférieure une collerette 78 circulaire montée coulissante dans la chambre 12 et comportant quatre gorges 80 (voir figure 3) longitudinales sur sa surface extérieure cylindrique. Les gorges 80 forment des passages d'air pour permettre à l'air provenant de la machine de circuler dans la chambre 12.

Au-dessus de la collerette 78, le poussoir 76 comporte une partie 82 coopérant avec un organe de commande (non représenté) de la machine destiné à entraîner le coulissement axial du poussoir 76 à l'encontre d'un ressort 84. Le ressort 84 est agencé entre la face 68 de l'organe 60 et la face 74 du poussoir 76.

Le poussoir 76 comporte un filetage axial se terminant sur la face 74 dans lequel est fixé par vissage l'extrémité supérieure de la queue 50 de la soupape 20.

Dans un tel agencement le ressort 84 sollicite l'ensemble du poussoir 76 et de la soupape 20 vers le haut c'est-à-dire qu'il rappelle élastiquement la soupape 20 vers sa position de repos ou position fermée.

Pour réaliser le poinçon, on installe tout d'abord la soupape 22 dans le corps du poinçon.

A cet effet le manchon est introduit par l'extrémité de soufflage du corps creux alors que dans la chambre 12 sont introduits le ressort 44 et la bague 38. La soupape 22 est vissée sur la bague 38 à l'aide d'une clé à six pans introduite dans le perçage axial 36 de section hexagonale, tandis que la bague 38 est maintenue par une clé. Le vissage étant réalisé, la tête de la soupape 22 vient en appui sur l'extrémité du corps creux, cet appui étant dû à l'action du ressort 44.

L'organe de guidage 60 est ensuite vissé dans la chambre 12 à l'aide d'une clé coopérant avec le perçage hexagonal 67 (voir figure 4). Les barres 72 sont alors introduites dans les alésages 70 de l'organe de guidage.

Le tube 46 est alors introduit à l'intérieur du manchon et son extrémité supérieure est vissée dans l'organe de guidage 60 à l'aide d'une clé coopérant avec le perçage axial 56 de section hexagonale.

La tige formant queue de soupape 20 est alors introduite par l'extrémité inférieure du tube 46 jusqu'à ce que la tête de soupape vienne fermer l'ouverture 4.

A ce moment le ressort 84 est introduit dans la chambre autour de l'étage de plus petite section de l'organe de guidage 60. Puis le poussoir 76 vient comprimer le ressort 84 et est fixé par vissage sur l'extrémité de la tige formant queue 50 de soupape 20.

On obtient ainsi un poinçon selon l'invention comportant deux moyens de soufflage intermittent à travers deux ouvertures 4 et 6 respectivement qui permettent de réaliser un flacon ayant un double corps comme représenté schématiquement sur la figure 2.

Il faut noter qu'un tel poinçon peut être utilisé pour des récipients ne délimitant qu'un seul volume mais ne pouvant être réalisés efficacement à l'aide d'un seul orifice de soufflage.

Le poinçon ainsi assemblé peut être monté sur une machine à injecter-souffler.

Au poste de soufflage de la machine un organe fait coulisser le poussoir 76 à l'encontre du ressort 84.

Un tel mouvement entraîne la tige 50 vissée dans le poussoir 76, ce qui provoque le déplacement de la tête de soupape qui s'éloigne de son siège pour permettre à l'air sous pression contenu dans la chambre 12 et le canal 50 de s'échapper à travers l'ouverture 4.

Par ailleurs le coulissement du poussoir 76 entraîne le coulissement des barres 72 et du manchon 26 dont la partie élargie formant tête de soupape s'éloigne, à l'encontre de l'effort du ressort 44, de son siège pour permettre le soufflage de l'air à travers l'ouverture 6.

On obtient ainsi, par exemple un flacon 90 possédant par exemple (voir Fig. 2) un col de déversement 92 et dont la paroi délimite un volume supérieur 94 et un volume inférieur 96.

Les volumes supérieur et inférieur sont reliés entre eux par un goulot d'étranglement 98 coaxial au col 92.

Dans le mode de réalisation décrit, le soufflage par les deux ouvertures 4 et 6 est simultané. En variante, il est possible de réaliser des soufflages espacés dans le temps, en retardant l'action des barres 72 sur le manchon 26 par diminution de leur longueur par exemple.

Le soufflage étant effectué l'organe de la machine libère le poussoir 76 et les ressorts 44 et 84 rappellent les soupapes vers leur position de repos, c'est-à-dire fermée.

## Revendications

1. Poinçon (2) pour injection-soufflage d'un objet creux en matière plastique, du type comprenant un corps cylindrique creux (8) comportant une partie de raccordement (A) à une machine à injecter-souffler prolongée axialement par une partie de positionnement (B) dans la paroi d'un moule associé de la machine, elle-même prolongée axialement par une partie de soufflage (C) destinée à être reçue dans la cavité du moule, le poinçon comprenant des premiers et des deuxièmes moyens de soufflage intermittent à travers, respectivement, des ouvertures de soufflage intermédiaire (6) et d'extrémité (4), d'une paraison préalablement injectée autour de la partie de soufflage (C), ces premiers et ces deuxièmes moyens étant agencés dans le corps creux (8), les première et deuxième ouvertures étant distinctes et espacées axialement l'une par rapport à l'autre, les moyens de soufflage comportant chacun un canal (52, 50) reliant l'ouverture associée (4, 6) à une chambre d'alimentation en air (12) et un obturateur (20, 22) de ladite ouverture relié à des moyens d'actionnement (18) commandés par un organe de commande de la machine, caractérisé en ce que les premiers moyens de soufflage comprennent un manchon intermédiaire (26) guidé à coulissement à la fois extérieurement dans le corps creux (8) et intérieurement sur un tube (46) fixe par rapport à ce corps et traversé par la tige (50) de l'obturateur (20) de l'ouverture d'extrémité (4).

2. Poinçon selon la revendication 1, caractérisé en ce que le manchon intermédiaire (26) présente une surface extérieure à au moins un méplat (28) délimitant avec le corps creux (8) un canal de soufflage qui relie la chambre d'alimentation (12) à l'ouverture intermédiaire (6).

3. Poinçon selon la revendication 1 ou 2, caractérisé en ce que la tige d'obturateur (50) porte à son extrémité distale un coulisseau (54) guidé dans ledit tube (46).

4. Poinçon selon l'une quelconque des revendications 1 à 3, caractérisé en ce que l'obturateur de l'ouverture d'extrémité (6) est prolongé par une tige centrale en saillie au-delà de la face d'extrémité dudit tube (46).

5. Poinçon selon l'une quelconque des revendications 1 à 4, caractérisé en ce que les moyens d'actionnement (18) sont commandés de manière à actionner simultanément les deux obturateurs.

6. Poinçon selon l'une quelconque des revendications 1 à 5, caractérisé en ce que la chambre d'alimentation en air (12) est située dans la partie de raccordement (A) et est ouverte sur la face radiale d'extrémité libre (16) de celle-ci pour communiquer, en position sur la machine, avec une arrivée d'air de la machine, l'extrémité de la chambre opposée à l'ouverture étant constituée d'une paroi (4) percée d'une ouverture communiquant avec un alésage axial (10) traversant le corps (8) du poinçon, et en ce que les moyens d'actionnement (18) sont agencés dans la chambre (12).

7. Poinçon selon la revendication 6, caractérisé en ce que chaque obturateur (20, 22) est du type comportant une soupape dont la queue (50, 46) est reliée aux moyens d'actionnement (18) et dont la tête (48, 24) coopère avec un siège délimitant l'ouverture associée (4, 6), en ce que chaque soupape est rappelée élastiquement contre son siège en position de repos fermée, et en ce que les moyens d'actionnement (18) comportent un poussoir (76) monté coulissant dans la chambre (12) pour être commandé par l'organe de commande de la machine, le poussoir ayant une face radiale de poussée (74) située à l'extrémité de celui-ci éloignée de l'ouverture, la queue de la soupape (20) des premiers moyens de soufflage étant constituée d'une tige (50) fixée au poussoir et s'étendant coaxialement au poinçon jusqu'à l'extrémité de ce dernier délimitant la première ouverture (4), et comportent un organe de guidage (60) fixé dans la chambre au-delà du poussoir à partir de l'ouverture et percé d'un alésage axial destiné à être traversé par la tige (50) et d'alésages longitudinaux (70) parallèles à l'axe du poinçon, une barre (72) étant montée coulissante dans chaque alésage longitudinal (70) et possédant une extrémité en appui contre la face de poussée (74) et une extrémité opposée en appui contre une face d'extrémité radiale de la queue de soupape (46) des deuxièmes moyens de soufflage.

8. Poinçon selon la revendication 7, caractérisé en ce que le manchon intermédiaire (26) a une extrémité située dans la chambre (12) entre le fond (14) de celle-ci et l'organe de guidage (60) pour coopérer avec les barres (72), et une extrémité opposée élargie pour former tête de soupape destinée à coopérer avec l'autre face d'extrémité du corps (8) du poinçon (2) qui forme siège de soupape.

9. Poinçon selon la revendication 8, caractérisé en ce qu'une bague (38) est agencée à l'extrémité du manchon située dans la chambre (12) et comporte une collerette (40), la soupape (22) des deuxièmes moyens de soufflage étant rappelée élastiquement par un ressort (44) hélicoïdal agencé entre le fond (14) de la chambre et la collerette (40), la soupape (20) des premiers moyens de soufflage étant rappelée élastiquement par un ressort hélicoïdal (84) agencé entre une face radiale (68) de l'organe de guidage (60) et le poussoir (76).

10. Machine (2) pour l'injection-soufflage d'un objet creux en matière plastique comportant un volume supérieur (94) et un volume inférieur (96) communiquant entre eux par un goulot d'étranglement (98) de diamètre réduit, du type comprenant un poste d'injection d'une paraison, un poste de soufflage comportant un moule de soufflage, et un poinçon de soufflage (2) adapté pour recevoir une paraison au poste d'injection puis pour coopérer avec le moule de soufflage, caractérisée en ce que le poinçon (2) est conforme à l'une quelconque des revendications 1 à 9, en ce que la cavité de moulage du moule de soufflage comporte deux volumes définissant la forme de l'objet creux à deux volumes, et en ce que la première ouverture (4) de soufflage est située dans l'un des volumes de soufflage et la deuxième ouverture (6) dans l'autre des volumes de ce moule.

## Claims

1. Mandrel (2) for injection blow-moulding of a hollow object made or plastic material, of the type comprising a hollow cylindrical body (8) comprising a connecting portion (A) to an injection blow-moulding machine, axially extended by a positioning portion (B) in the wall of an associated mould of the machine, itself extended axially by a blowing portion (C) intended to be received in the cavity of the mould, the mandrel comprising first and second intermittent blowing means respectively through intermediate (6) and terminal (4) blowing openings, of a preform previously injected around the blowing portion (C), these first and second means being arranged in the hollow body (8), the first and second openings being distinct and spaced apart axially from one another, the blowing means each comprising a channel (52, 50) connecting the associated opening (4, 6) to an air supply chamber (12) and a closure seal (20, 22) of the said opening connected to actuating means (18) controlled by a control unit of the machine, characterised in that the first blowing means comprise an intermediate sleeve (26) slidingly guided both externally in the hollow body (8) and internally on a tube (46) which is fixed relative to this body, and through which the stem (50) of the closure seal 20) of the terminal opening (4) passes.

2. Mandrel according to Claim 1, characterised in that the intermediate sleeve (26) has an external surface with at least one flat surface (28) defining with the hollow body (8) a blowing channel which connects the feed chamber (12) to the intermediate opening (6).

3. Mandrel according to Claim 1 or 2, characterised in that the stem of the seal means (5) has at its distal end a slide (54) guided in the said tube (46).

4. Mandrel according to any one of Claims 1 to 3, characterised in that the closure seal of the terminal opening (6) is extended by a central stem projecting beyond the terminal face of the said tube (46).

5. Mandrel according to any one of Claims 1 to 4, characterised in that the actuating means (18) are controlled simultaneously so as to actuate both closure seals.

6. Mandrel according to any one of Claims 1 to 5, characterised in that the air supply chamber (12) is situated in the connecting portion (A) and opens on to the free radial terminal face (16) of the latter in order to communicate when in position on the machine, with an air supply from the machine, the end of the chamber opposite the opening being constituted by a wall (4) through which there passes an opening communicating with an axial bore (10) passing through the body (8) of the mandrel, and in that the actuating means (18) are arranged in the chamber (12).

7. Mandrel according to Claim 6, characterised in that each closure seal (20, 22) is of the type comprising a valve whose stem (50, 46) is connected to the actuating means (18), and whose head (48, 24) co-operates with a seat defining the associated opening (4, 6), in that each valve is returned resiliently against its seat in the inoperative closed position, and in that the actuating means (18) comprise a pusher (76) mounted to slide in the chamber (12) in order to be controlled by the control unit of the machine, the pusher having a radial pushing face (74) situated at the end of the latter and remote from the opening, the stem of the valve (20) of the first blowing means being constituted by a rod (50) fixed to the pusher and extending coaxially to the mandrel as far as the end of the latter defining the opening (4), and comprise a guide unit (60) fixed in the chamber beyond the pusher from the opening and through which there passes an axial bore intended to have passing through it the stem (50) and longitudinal bores (70) parallel to the axis of the mandrel, a rod (72) being mounted to slide in each longitudinal bore (70) and having an end supported against the pusher face (74), and an opposite end supported against a terminal radial face of the valve stem (46) of the second blowing means.

8. Mandrel according to Claim 7, characterised in that the intermediate sleeve (26) has an end situated in the chamber (12) between the base (14) of the latter and the guide unit (60), in order to co-operate with the rod (72), and an opposite widened end in order to form a valve head intended to co-operate with the other end face of the body (8) of the mandrel (2), which forms a valve seat.

9. Mandrel according to Claim 8, characterised in that a ring (38) is arranged at the end of the sleeve situated in the chamber (12), and comprises a collar (40), the valve (22) of the second blowing means being returned resiliently by a helical spring (44) arranged between the base (14) of the chamber and the collar (40), the valve (20) of the first blowing means being returned resiliently by a helical spring (84) arranged between a radial face (68) of the guide unit (60) and the pusher (76).

10. Machine (2) for injection blow-moulding of a hollow object made of plastic material comprising an upper volume (94) and a lower volume (96) intercommunicating by means of a constricted throat (98) of reduced diameter, of the type comprising a station for injecting a preform, a blowing station comprising a blow mould, and a blow-moulding mandrel (2) adapted to receive a preform at the injection post then to co-operate with the blow-mould, characterised in that the mandrel (2) accords with any one of Claims 1 to 9, and in that the mould cavity of the blow mould comprises two volumes defining the shape of the two-volume hollow object, and in that the first blowing opening (4) is situated in one of the blowing volumes, and the second opening (6) in the other of the volumes of this mould.

## Patentansprüche

1. Dorn (2) zum Spritzblasformen eines hohlen Gegenstandes aus Kunststoff mit einem hohlen zylindrischen Gehäuse, (8), das einen Verbindungsteil (A) für eine Spritzblasformmaschine aufweist, der in Axialrichtung durch einen Teil (B) zum Positionieren in der Wand einer zur Maschine gehörenden Form verlängert ist, wobei der Positionierungsteil in Axialrichtung durch einen Blasteil (C) verlängert ist, der vom Formhohlraum aufnehmbar ist, wobei der Dorn erste und zweite Einrichtungen zum diskontinuierlichen Blasen eines Vorformlinges, der vorher um den Blasteil (C) herumgespritzt wurde, über eine Zwischenblasöffnung (6) und eine Endblasöffnung (4) aufweist, wobei diese ersten und zweiten Einrichtungen im hohlen Gehäuse (8) angeordnet sind, die ersten und zweiten Öffnungen verschieden und mit Axialabstand voneinander angeordnet sind, die Blaseinrichtungen jeweils einen Kanal (52, 50) umfassen, der die zugehörige Öffnung (4, 6) mit einer Luftzuführkammer (12) verbindet, und wobei ein Verschluß (20, 22) dieser Öffnung mit Betätigungseinrichtungen (18) verbunden ist, die durch ein Steuerorgan dar Machine gesteuert werden, dadurch gekennzeichnet, daß die ersten Blaseinrichtungen eine Zwischenhülse (26) umfassen, die sowohl außen im hohlen Gehäuse (8) als auch innen an einem relativ zum Gehäuse festen Rohr (46) gleitend geführt ist und von der Stange (50) des Verschlusses (20) der Endöffnung (4) durchdrungen wird.

2. Dorn nach Anspruch 1, dadurch gekennzeichnet, daß die Zwischenhülse (26) eine Außenfläche mit mindestens einer Abflachung (28) aufweist, die mit dem hohlen Gehäuse (8) einen Blaskanal begrenzt, der die Luftzuführkammer (12) mit der Zwischenöffnung (6) verbindet.

3. Dorn nach Anspruch 1 oder 2, dadurch gekennzeichnet, daß die Stange (50) des Verschlusses an ihrem distalen Ende einen Gleitstein (54) aufweist, der in dem Rohr (46) geführt ist.

4. Dorn nach einem der Ansprüche 1 bis 3, dadurch gekennzeichnet, daß der Verschluß der Endöffnung (6) über eine zentrale Stange verlängert ist, die über die Endfläche des Rohres (46) hinaus vorsteht.

5. Dorn nach einem der Ansprüche 1 bis 4, dadurch gekennzeichnet, daß die Betätigungseinrichtungen (18) derart gesteuert sind, daß sie gleichzeitig die beiden Verschlüsse betätigen.

6. Dorn nach einem der Ansprüche 1 bis 5, dadurch gekennzeichnet, daß die Luftzuführkammer (12) im Verbindungsteil (A) angeordnet und zur radialen Fläche des freien Endes (16) desselben hin offen ist, um in der Position an der Maschine mit einer Luftzuführung der Maschine zusammenzuwirken, wobei das der Öffnung gegenüberliegende Ende der Kammer von einer Wand (4) gebildet wird, die von einer Öffnung durchdrungen ist, welche mit einer Axialbohrung (10) in Verbindung steht, die das Gehäuse (8) des Dornes durchdringt, und daß die Betätigungseinrichtungen (18) in der Kammer (12) angeordnet sind.

7. Dorn nach Anspruch 6, dadurch gekennzeichnet, daß jeder Verschluß (20, 22) ein Ventil aufweist, dessen hinteres Ende (50, 46) mit den Betätigungseinrichtungen (18) verbunden ist und dessen Kopf (48, 24) mit einem Sitz zusammenwirkt, der die zugehörige Öffnung (4, 6) begrenzt, und daß jedes Ventil in seiner geschlossen Ruhelage elastisch gegen seinen Sitz rückgestellt ist und daß die Betätigungseinrichtungen (18) einen Stößel (76) aufweisen, der gleitend in der Kammer (12) montiert ist, um vom Steuerorgan der Maschine gesteuert zu werden, wobei dieser Stößel eine radiale Druckfläche (74) besitzt, die an seinem von der Öffnung entfernten Ende angeordnet ist, wobei das hintere Ende des Ventils (20) der ersten Blaseinrichtungen durch eine Stange (50) gebildet ist, die am Stößel fixiert ist und sich koaxial zum Dorn bis zu dem Ende des Dornes erstreckt, das die erste Öffnung (4) begrenzt, und ein Führungsorgan (60) aufweisen, das in der Kammer jenseits des Stößels von der Öffnung aus fixiert ist und eine Axialbohrung, die von der Stange (50) durchdrungen wird, und Längsbohrungen (70) besitzt, die parallel zur Achse des Dornes verlaufen, wobei ein Schieber (72) gleitend in jeder Längsbohrung (70) montiert ist und ein Ende, das gegen die Druckfläche (74) gelagert ist, sowie ein gegenüberliegendes Ende besitzt, das gegen eine radiale Endfläche des hinteren Endes des Ventils (46) der zweiten Blaseinrichtungen gelagert ist.

8. Dorn nach Anspruch 7, dadurch gekennzeichnet, daß die Zwischenhülse (26) ein Ende besitzt, das in der Kammer (12) zwischen dem Boden (14) der Kammer und dem Führungsorgan (60) angeordnet ist, um mit den Schiebern (72) zusammenzuwirken, und ein gegenüberliegendes vergrößertes Ende zur Ausbildung des Kopfes des Ventils, das mit der anderen Endfläche des Gehäuses (8) des Dornes (2), die den Sitz des Ventiles bildet, zusammenwirkt.

9. Dorn nach Anspruch 8, dadurch gekennzeichnet, daß ein Ring (38) am Ende der in der Kammer (12) angeordneten Hülse vorgesehen ist und einen Bund (40) trägt, daß das Ventil (22) der zweiten Blaseinrichtungen durch eine Schraubenfeder (44), die zwischen dem Boden (14) der Kammer und dem Bund (40) angeordnet ist, elastisch rückgestellt wird und daß das Ventil (20) der ersten Blaseinrichtungen durch eine Schraubenfeder (84), die zwischen einer Radialfläche (68) des Führungsorganes (60) und dem Stößel (76) angeordnet ist, elastisch rückgestellt wird.

10. Maschine (2) zum Spritzblasformen eines hohlen Gegenstandes aus Kunststoff, der ein oberes Volumen (94) und ein unteres Volumen (96) besitzt, welche miteinander über einen Engpaß (98) mit reduziertem Durchmesser in Verbindung stehen, mit einer Station zum Spritzen eines Vorformlings, einer Station zum Blasen, die eine Blasform aufweist, und einem Blasdorn (2), der einen Vorformling von der Spritzstation aufnehmen kann, um dann mit der Blasform zusammenzuwirken, dadurch gekennzeichnet, daß der Dorn (2) gemäß einem der Ansprüche 1 bis 9 ausgebildet ist und daß der Formhohlraum der Blasform zwei die Form des zwei Volumina besitzenden hohlen Gegenstandes festlegende Volumina aufweist, wobei die erste Blasöffnung (4) in einem der Blasvolumina und die zweite Öffnung (6) im anderen der Volumina der Form angeordnet ist.
